(19) Europäisches Patentamt / European Patent Office / Office européen des brevets

(11) **EP 2 191 960 A1**

(12) **EUROPEAN PATENT APPLICATION**
published in accordance with Art. 153(4) EPC

(43) Date of publication:
02.06.2010 Bulletin 2010/22

(51) Int Cl.:
*B32B 5/18* (2006.01)   *B05D 3/00* (2006.01)
*B05D 5/06* (2006.01)   *C08J 7/04* (2006.01)
*C08J 9/28* (2006.01)

(21) Application number: 08832604.6

(22) Date of filing: 17.09.2008

(86) International application number:
PCT/JP2008/066702

(87) International publication number:
WO 2009/038061 (26.03.2009 Gazette 2009/13)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 21.09.2007 JP 2007246216

(71) Applicant: Fujifilm Corporation
Tokyo 106-8620 (JP)

(72) Inventors:
• ITO, Koju
Minami-ashigara-shi
Kanagawa 250-0193 (JP)
• YAMAZAKI, Hidekazu
Minami-ashigara-shi
Kanagawa 250-0193 (JP)

(74) Representative: HOFFMANN EITLE
Patent- und Rechtsanwälte
Arabellastrasse 4
81925 München (DE)

(54) **MULTILAYERED FILM AND PROCESS FOR PRODUCING THE SAME**

(57) A multilayer film including a porous layer, which is formed from a first polymer and has a plurality of pores, and a support (33) for supporting the porous layer is produced. The porous layer is obtained by applying a coating liquid to the support (33). The coating liquid is a solution containing the first polymer and a solvent. The support (33) is formed from a second polymer capable of being dissolved into the solvent for forming the coating liquid. Water vapor is condensed from ambient water on the applied coating liquid, and the solvent is evaporated from the coating layer within 20 minutes. Thereafter, the water drops are evaporated from the coating layer. A plurality of pores are uniformly formed in the coating layer. Thereby, it is possible to produce a multilayer film having a thickness which achieves excellent handleability.

FIG. 3

EP 2 191 960 A1

**Description**

Technical Field

The present invention relates to a multilayer film and a production method of the same, and more particularly to a multilayer film having a porous layer in which a plurality of fine pores are formed and a production method of the same.

Background Art

In recent years, increase in integration degree, higher information density, and higher image definition have been desired more and more in the fields of optics and electronics. Therefore, a film for use in these fields is strongly required to have a finer structure. Additionally, the film having such a fine structure is also required in a medical field and the like. As a film required in the medical field, there are a film used as a scaffold for cell culture in a living body (see Japanese Patent Laid-Open Publication No. 2001-157574, for example) and a film used as a hemofiltration membrane (see Japanese Patent Laid-Open Publication No. 2003-149096, for example).

As the film having the fine structure, there is a film in which a plurality of fine pores are formed to constitute a honeycomb structure of micron ($\mu$m) scale. For the purpose of producing such a film having the honeycomb structure, there is disclosed a method in which a solution of a predetermined polymer dissolved into a hydrophobic organic solvent is cast, and at the same time as the organic solvent is evaporated from the solution, water vapor is condensed from ambient gas on a surface of the cast solution to generate extremely small water drops thereon, and the extremely small water drops are evaporated from the solution (see Japanese Patent Laid-Open Publication No. 2002-335949, for example). The film produced by the method described above is referred to as a self-assembled film because of its formation behavior of the fine structure.

It has been required that a thickness of the film having the honeycomb structure is increased such that the film becomes easier to deal with. However, the thickness of the film which can be produced by the methods disclosed in Japanese Patent Laid-Open Publications Nos. 2001-157574, 2003-149096, and 2002-335949 is generally limited to be extremely thin, and the thickness of the film is influenced by a diameter of pores to be formed in the film. In order to produce a film having the honeycomb structure of micron ($\mu$m) scale, it is necessary to decrease a concentration of the solution to be cast. However, as the concentration of the solution is decreased, the viscosity thereof is also decreased. Additionally, in general, as the viscosity of the solution is lower, the solution tends to be spread on the support more readily. As a result, the produced film has a small thickness. Such produced film is too thin and difficult to deal with. In view of the above, the solution is cast onto a hard substrate such as a glass, and used together with the substrate without being peeled from the substrate. Alternatively, the solution is dropped onto water or gel, and after the solvent is evaporated from the solution dropped onto the water or gel, the solution is skimmed as a dried film from the water or gel using a frame member, and the film supported by the frame member is used.

Further, as a method for obtaining a film having a larger thickness, it is possible to increase the amount of the solution to be cast per unit area, such that the thickness of the casting film is increased. However, in a case where the thickness of the casting film is increased by the above-described method, the time required for drying the casting film is increased in accordance with the increase in the amount of the solution to be cast per unit area, and therefore the productivity of the film is extremely decreased. Further, the diameter of the pores formed in the film is influenced by the time for growing the water drops and the time for evaporating the solvent. Therefore, as the time for growing the water drops and the time for evaporating the solvent are increased, the size of the pores formed in the film tends to be increased. Accordingly, as the thickness of the casting film is increased and thereby the time for drying the casting film is increased, it becomes difficult to decrease the diameter of the pores formed in the film. As described above, it has been difficult to control the thickness of the film and the diameter of the pores formed in the film independently from each other.

Furthermore, as a method for producing a film having a larger thickness, it is also possible to increase a concentration of the polymer in the solution. However, as the concentration of the polymer is increased, a viscosity of the solution is also increased, and thus the time required for the water drops to enter the inside of the casting film is increased, or the depth of the water drops entering the inside of the casting film is decreased. Accordingly, the arrangement of the water drops becomes irregular, or a trouble of arrangement of the pores in which the pores formed in the film become nonuniform in shape and size occurs. As described above, it has been difficult to achieve increase in thickness of the film and regularity in arrangement of the pores in the film at the same time.

As described above, it has been impossible to control the diameter of the pores formed in the film and the regularity in the arrangement of the pores in the film as well as controlling the thickness of the film.

Disclosure of Invention

In view of the above, an object of the present invention is to provide a film in which a plurality of uniform pores are formed and a thickness of which is not influenced by a diameter of the pores in the film, such that the film can be used without any support of a frame member or a hard substrate and is excellent in handleability, and to provide a production method of the film.

A multilayer film of the present invention includes a porous layer which is formed from a first polymer and has a plurality of pores, and a support which is formed from a second polymer and supports the porous layer. The second polymer has solubility in a solvent capable of dissolving the first polymer.

Further, it is preferable that a value obtained by dividing TA by D (TA/ D) is in a range 2 or more and 200 or less, wherein TA denotes a thickness of the multilayer film, and D denotes a diameter of each of pores formed in the multilayer film. The porous layer is preferably formed by applying a coating liquid of the first polymer dissolved in the solvent to at least one of surfaces of the support.

According to the present invention, there is provided a method for producing a multilayer film having a layer and a support, in which the layer is formed by drying after applying a coating liquid of a first polymer dissolved in a solvent. The method includes: a step of applying the coating liquid to the support formed from the second polymer having solubility in the sol vent; a step of condensing water vapor from ambient gas on the coating liquid applied to the support; a step of evaporating the solvent from the coating liquid within 20 minutes such that water drops generated by the condensation remain on the coating liquid; and a step of evaporating the water drops.

According to the method for producing a multilayer film of the present invention, preferably, the coating liquid is applied to the support such that a coating thickness is in a range between 0.01 mm or more and 1 mm or less. A speed for feeding humidified air to the coating liquid applied to the support is preferably in a range between 0.02 m/sec or more and 2 m/sec or less.

The multilayer film of the present invention is excellent in handleability and can be used without any support of the frame member or the hard substrate unlike the case of the conventional films, because a plurality of uniform pores are formed in the film and the thickness of the film is not influenced by the diameter of the pores in the film. Further, according to the film production method of the present invention, it is possible to produce the multilayer film as described above.

Brief Description of Drawings

Figure 1A is a plan view of a multilayer film according to the present invention, Figure 1B is a cross sectional view taken along solid lines b-b of Fig. 1A, and Figure 1C is a cross sectional view taken along solid lines c-c of Fig. 1A;
Figure 2A is a cross sectional view of a multilayer film according to another embodiment of the present invention, and Figure 2B is a cross sectional view of a multilayer film according to yet another embodiment of the present invention; and
Figure 3 is a schematic diagram of a film production apparatus.

Best Mode for Carrying Out the Invention

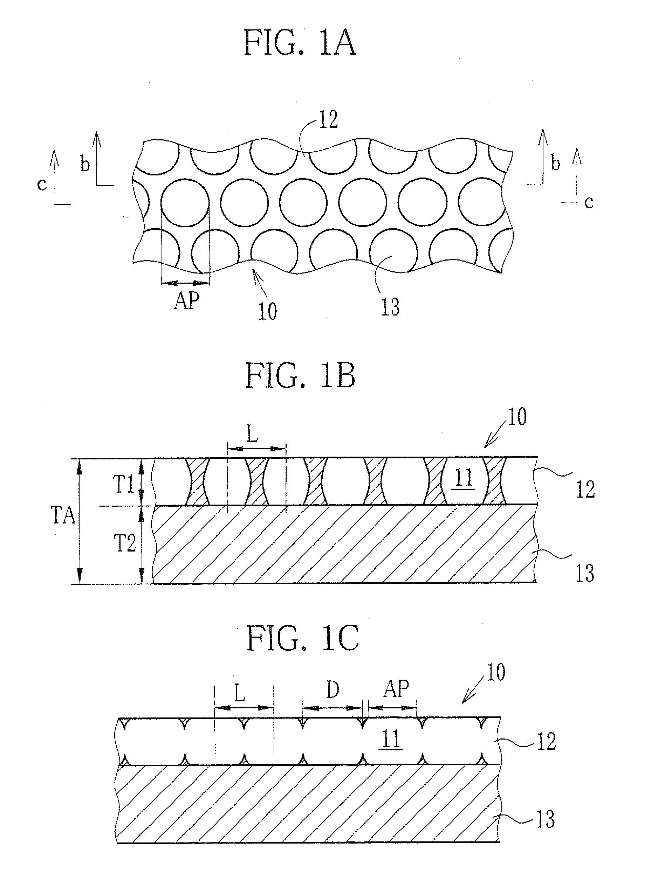

As shown in fig. 1, a multilayer film 10 includes a porous layer 12 in which a plurality of pores 11 are formed, and a support 13 for supporting the porous layer 12.

The plurality of pores 11 are formed so as to be arranged in a plane direction of the multilayer film 10 in the porous layer 12. As shown in Fig. 1A, the pores 11 are formed in a honeycomb manner in the porous layer 12. The pores 11 have an approximately specified shape and size respectively, and are arranged regularly. The pores 11 are formed so as to penetrate both surfaces of the porous layer 12 in a thickness direction of the porous layer 12, as shown in Figs. 1B and 1C. Accordingly, the support 13 is exposed outside through the pores 11 when the multilayer film 10 is seen from above the porous layer 12.

A thickness TA of the multilayer film 10 is the sum of a thickness T1 of the porous layer 12 and a thickness T2 of the support 13. The multilayer film 10 has a multilayer structure including the porous layer 12 and the support 13, and is thicker than a conventional single layer film including only the porous layer 12. Therefore, the multilayer film 10 is excellent in handleability and can be used without any support of a frame member or the like.

Each of the porous layer 12 and the support 13 is formed from a polymer. The support 13 is formed from a polymer which is dissolved into a solvent capable of dissolving a polymer for forming the porous layer 12. Hereinbelow, the polymer for forming the porous layer 12 is referred to as a first polymer, and the polymer for forming the support 13 is referred to as a second polymer. Since both of the porous layer 12 and the support 13 are polymer, the multilayer film 10 as a whole has flexibility unlike a porous material in which the porous layer is formed on a glass. Further, the multilayer film 10 can be adhered to a curved surface to be used. Accordingly, the multilayer film 10 can be used as a protection layer for protecting a wound site, a percutaneous absorption agent, and the like.

Particularly preferably, the first polymer and the second polymer are the same polymers, and thereby the porous layer 12 has an affinity with the support 13. Accordingly, the porous layer 12 is not easily peeled from the support 13, and the adhesion between the layers is increased, such that the handleability of the multilayer film is increased.

The first polymer and the second polymer may be different from each other. In this case, the first polymer preferably has both of a hydrophilic group and a hydrophobic group as described above. The second polymer does not have to have both of the hydrophilic group and the hydrophobic group. Note that, in a case where the second polymer has both of the hydrophilic group and the hydrophobic group, the hydrophilic group of the first polymer may be different from the hydrophilic group of the second polymer. Additionally, the hydrophobic group of the first polymer may be different from the hydrophobic group of the second polymer.

In an amphiphilic compound to be mixed with the polymer, a ratio of the number of hydrophilic group to the number of hydrophobic group is preferably in the range of 0.1 / 9.9 to 4.5 / 5.5. Thereby, finer water drops can be generated on a first layer 25 more densely. In a case where the ratio of the number of hydrophilic group to the number of hydrophobic group is not within the above range, the size of the pores formed in the porous layer 12 varies, and concretely, a variation coefficient (unit; %) of the pore diameters that is determined as { (standard deviation of pore diameter) / (average of pore diameter) } $\times$ 100 becomes 10% or more in some cases. Further, in a case where the ratio of the number of hydrophilic group to the number of hydrophobic group is not within the above range, the regularity in arrangement of the pores is degraded in some cases.

It is preferable that at least two kinds of amphiphilic compounds different from each other are used, because it becomes possible to control the positions for forming the water drops and the size of the water drops. It is also preferable that at least two kinds of polymers different from each other are used, because the same effect as the above can be achieved.

As the preferable first polymer, there are vinyl polymer (for example, polyethylene, polypropylene, polystyrene, polyacrylate, polymethacrylate, polyacrylamide, polymethacrylamide, polyvinyl chloride, polyvinylidene chloride, polyvinylidene fluoride, polyhexafluoropropene, polyvinyl ether, polyvinyl carbazole, polyvinyl acetate, polytetrafluoroethylene, and the like), polyesters (for example, polyethylene terephthalate, polyethylene naphthalate, polyethylene succinate, polybutylene succinate, polylactic acid, and the like), polylactone (for example, polycaprolactone and the like), cellulose acetate, polyamide or polyimide (for example, nylon, polyamic acid, and the like), polyurethane, polyurea, polybutadiene, polycarbonate, polyaromatics, polysulfone, polyethersulfone, polysiloxane derivative, and the like.

As the preferable second polymer, there are cellulose acetate, cyclic polyolefin, polyester, polycarbonate, polyurethane, polybutadiene, and the like.

As described above, the multilayer film 10 has the multilayer structure including the porous layer 12 and the support 13. Therefore, even if a plurality of the pores 11 are formed in the porous layer 12 which serves as one surface of the multilayer film 10, A value TA/D that is obtained by dividing the thickness TA of the multilayer film 10 by a diameter D of the pores 11 can be made within the range between 2 or more and 200 or less. Accordingly, even if the film has a porous structure in which the pore diameter is several micrometers, the film can have a sufficient self-supporting property, and therefore the film becomes excellent in handleability. The film having TA/D of less than 2 is too thin, and difficult to deal with without providing a thin reinforcement member or the like in many cases. Therefore, TA/D is preferably more than 2, and more preferably more than 5. In contrast, the film having TA/D of more than 200 is too thick, and difficult to deal with in many cases. According to the present invention, when the film is used for an application in which the pore diameter is more than 10$\mu$m, TA/D is set at approximately 20. When the film is used for an application in which the pore diameter is less than 1$\mu$m, TA/D is set at approximately 200. Note that, as shown in Fig. 1C, in a case where the pores 11 are formed such that an open pore diameter AP on the surface of the porous layer 12 is smaller than the pore diameter D, TA/D is preferably in the range between 2 or more and 100 or less. Such a condition of TA/D can be achieved by providing the porous structure described above.

Note that a plurality of the supports 13 may be stacked on one another. Thereby, it is possible to increase the strength or hardness of the multilayer film, or a multilayer film having a thickness more suitable for each application can be produced.

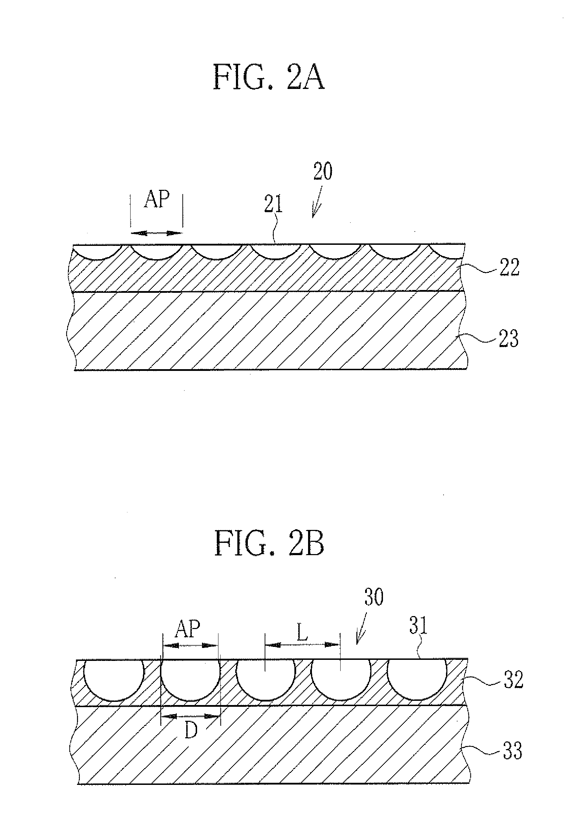

Fig. 2A is a cross sectional view of a multilayer film 20, and Fig. 2B is a cross sectional view of a multilayer film 30. A plan view of each of Fig. 2A and Fig. 2B is the same as Fig. 1A, and therefore will be omitted.

The multilayer film 20 includes a porous layer 22 in which a plurality of pores 21 are formed, and a support 23 for supporting the porous layer 22. The plurality of pores 21 are formed so as to be arranged in a plane direction of the multilayer film 20 in the porous layer 22, as in the case of the multilayer film 10 (see Fig. 1). The pores 21 each having approximately specified shape and size are arranged regularly. The pores 21 are formed as dimples on an exposed surface of the porous layer 22. Accordingly, the exposed surface is asymmetrical with a surface which is in contact with the support 23 in the porous layer 22.

The multilayer film 30 includes a porous layer 32 in which a plurality of pores 31 are formed, and a support 33 for supporting the porous layer 32. The pores 31 are formed as dimples on an exposed surface of the porous layer 32, as in the case of the multilayer film 20. A surface of the porous layer 32 which is in contact with the support 33 is not exposed. Accordingly, the exposed surface is asymmetrical with the surface which is in contact with the support 33 in the porous layer 32. The pores 21 are dimples deeper than the pores 31 formed in the multilayer film 20, and the diameter D of the pores 31 is larger than the open pore diameter AP on the surface of the porous layer 32.

Although the pores 21 are independent from each other in the porous layer 22 of the multilayer film 20, and the pores 31 are independent from each other in the porous layer 32 of the multilayer film 30, the present invention is not limited thereto. For example, it is also possible to produce a multilayer film in which the dimples are interconnected with each other, that is, a distance L between the centers of adjacent dimples is smaller than the open pore diameter AP or the pore diameter D, although not shown in the drawing.

Note that the materials of the porous layer 22 and the support 23 in the multilayer film 20 and the materials of the porous layer 32 and the support 33 in the multilayer film 30, and the value obtained by dividing the thickness by the pore diameter D are the same as those in the multilayer film 10 (see Fig. 1), and therefore the descriptions thereof will be omitted.

The arrangement of each of the pores in the multilayer films 10, 20, and 30 (see Figs. 1 and 2) vary in accordance with the degree of density of arrangement of the water drops to be described later, the size of the water drops, drying speed, solid content concentration of the coating liquid for forming the porous layer, the timing for evaporating the solvent contained in the coating liquid, and the like. In order to use the multilayer film as an antireflection film and the like, the thickness TA of the multilayer film is preferably in the range between 20μm or more and 200μm or less, and in this case, the pore diameter D is preferably in the range between 0.2μm or more and 0.6μm or less, and a distance L between the centers of adjacent pores is preferably in the range between 0.2μm or more and 1μm or less. Further, in order to use the multilayer film as a percutaneous absorption agent, the thickness TA of the multilayer film is preferably in the range between 40μm or more and 100μm or less, and in this case, the pore diameter D is preferably in the range between 1μm or more and 20μm or less, and a distance L between the centers of adjacent dimples is preferably in the range between 1μm or more and 30μm or less.

The production method of each of the multilayer films 10 (see Fig. 1), 20, and 30 is basically identical to each other, and therefore the production method of the multilayer film 30 is described hereinbelow, and the description of the production method of each of the multilayer films 10 and 20 will be omitted. The porous layer is formed by application of the coating liquid of the first polymer dissolved in the solvent. The second polymer for forming the support 33 can be dissolved into the solvent.

The sort of the solvent to be used is not especially restricted, so far as it is hydrophobic and the polymer can be dissolved into it. Examples of the solvent are aromatic hydrocarbon (for example, benzene, toluene, and the like), halogenated hydrocarbon (for example, dichloromethane, chlorobenzene, carbon tetrachloride, 1-bromopropane, and the like), cyclohexane, ketone (for example, acetone, methyl ethyl ketone, and the like), ester (for example, methyl acetate, ethyl acetate, propyl acetate, and the like), and ether (for example, tetrahydrofuran, methyl cellosolve, and the like). A plurality of compounds among them may be combined to be used together as the solvent. Additionally, alcohol or the like may be added to the compound or the mixture of compounds.

Further, in order to reduce adverse influence on the environment to the minimum, an organic solvent containing no dichloromethane has been proposed recently. In this case, the solvent preferably contains ether having 4 to 12 carbon atoms, ketone having 3 to 12 carbon atoms, ester having 3 to 12 carbon atoms, brominated hydrocarbon such as 1-bromopropane, and the like. The solvent may contain a mixture of them. For example, the mixed organic solvent contains methylacetate, acetone, ethanol, and n-butanol. Note that ether, ketone, ester, and alcohol may have a cyclic structure. A compound having at least two functional groups thereof (that is, -O-, -CO-, -COO-, and -OH) may be used as the solvent.

When two or more kinds of compounds different from each other are used as the solvent, the proportion of the compounds may be adequately adjusted. Thereby, it is possible to control the formation speed of the water drops, a depth of the water drops entering the inside of a coating layer to be described later, and the like.

Preferably, the content of the first polymer is in the range between 0.02 pts.wt. or more and 30 pts. wt. or less, if the content of an organic solvent is determined as 100 pts.wt. in the coating liquid. Thereby, the porous layer 12 having high quality can be produced with high productivity. If the content of the first polymer to the organic solvent of 100 pts.wt. is less than 0.02 pts.wt., it takes too much time to evaporate the organic solvent, because the content rate of the solvent in the coating liquid is too large. Accordingly, the productivity of the multilayer film 10 is decreased. In contrast, if the content of the first polymer to the organic solvent of 100 pts.wt. is more than 30 pts.wt., it may be impossible to cause the water drops generated by the condensation to change the form of the coating liquid for forming the coating layer, and therefore the surface of the porous layer 12 has unevenness in some cases.

The film production process includes a step for coating one of the surfaces of the support 33 with the coating liquid, a step for generating water drops by condensing water vapor from ambient gas on applied the coating liquid, a step for evaporating the solvent contained in the coating liquid so that the water drops are remained, that is, the water drops are not completely evaporated, and a step for evaporating the water drops to form the porous layer 32.

Coating of the coating liquid is performed by the following methods. In a first method, the coating liquid is applied and spread on a support disposed stationary. In a second method, the coating liquid is discharged from a coating die onto a moving support. Both of the methods may be adopted in the present invention. The first method is generally suitable for high-minx low-volume production, and the second method is generally suitable for mass production. Note that, in the second method, if the coating liquid is continuously discharged, a long multilayer film 30 can be produced, and if the coating liquid is intermittently discharged, that is, if one set of starting and stopping of discharging the coating liquid from the coating die is repeated at a predetermined interval, a plurality of multilayer films having a predetermined length can be produced one by one continuously.

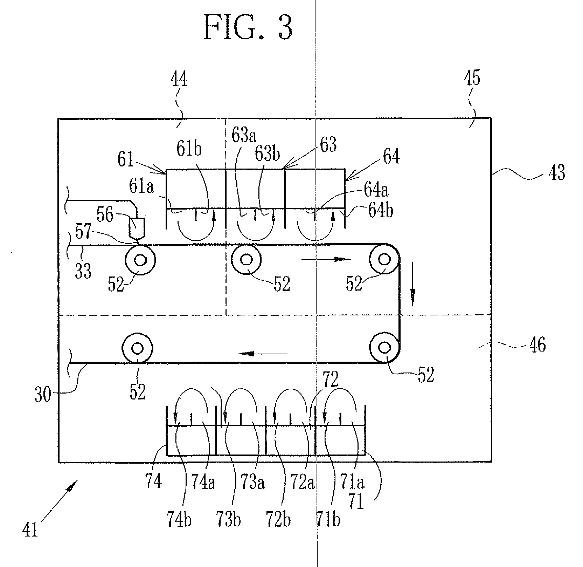

The multilayer film can be produced by a multilayer film production apparatus 41 shown in Fig. 3. The coating step using the coating liquid 57, the condensation step, the solvent evaporating step, and the water drops evaporating step are performed in a casting chamber 43. The solvent vapor generated in the casting chamber 43 is recovered by a recovery device (not shown), and then refined in a refining device (not shown) disposed outside the casting chamber 43, to be reused.

The casting chamber 43 for use in this embodiment is an integrated-type casting chamber, and partitioned into a first area 44, a second area 45, and a third area 46. In the first area 44, the coating liquid 57 is applied to the support 33 and water vapor is condensed from ambient gas on applied the coating liquid 57. In the second area 45, the solvent is evaporated. In the third area 46, the water drops are evaporated. However, these areas may be independent from each other. Note that, in the second area 45, the solvent is evaporated, and the extremely small water drops generated in the first area 44 are gradually grown up. Thereby, the water drops during or after growing up enter the inside of the applied coating liquid. In the third area 46, the water drops after growing up are evaporated such that a plurality of pores are formed in the coating liquid 57 applied to the support. Thereby, the porous layer 32 (see Fig. 2) is obtained. Upon passing through the first to third areas 44 to 46 described above, the applied coating liquid is self-assembled, and becomes the porous layer including voids having a predetermined size and shape.

A plurality of rollers 52 are disposed in a conveying path for the support 33 such that peripheral surfaces of the rollers 52 support the support 33. Some of the rollers 52 are driving rollers, and in accordance with the rotation of the driving roller, the support 33 is continuously conveyed. The temperature of peripheral surface of each of the rollers 52 is controlled independently from each other by a temperature controller (not shown). The support 33 comes into contact with the rollers 52 such that the temperature of the support 33 is controlled in each of the first to third areas 44 to 46.

In the first area 44, the coating liquid 57 is discharged from a casting die 56 to form the coating layer on the support 33. The coating liquid 57 is preferably applied such that the thickness of the coating layer before being dried is constant within the range between 0.01mm or more and 1mm or less. However, even if the thickness of the coating layer is within the above range, in accordance with the presence of thickness unevenness, it becomes impossible to generate uniform water drops, it becomes impossible to grow the generate water drops such that each of the water drops has a specified size, or it becomes impossible to arrange the water drops in a uniform manner, in some cases. When the thickness of the coating layer 58 is less than 0.01mm, the surface of the coating layer 58 becomes unstable, and therefore the coating liquid 57 is not uniformly applied and repelling of the coating liquid 57 occurs on the support 33 in some cases. In contrast, when the thickness of the coating layer 58 is more than 1mm, it takes too much time to dry the coating layer 58 and therefore the productivity of the multilayer film is decreased in some cases.

An air feeding / sucking unit 61 is disposed above a moving path of the coating layer. The air feeding / sucking unit 61 includes an outlet 61 a through which humidified air is fed at the vicinity of the coating layer, and an inlet 61b through which the gas around the coating layer is sucked and discharged. Further, the air feeding / sucking unit 61 is provided with a blowing controller (not shown) for independently controlling a temperature, a dew point, a humidity, and a blowing speed of the air to be fed, and a suction force for sucking the air. The outlet 61a has a filter for keeping a dust level, namely a cleaning level of the humidified air. A plurality of the air feeding / sucking units 61 may be arranged in the moving direction of the support 33.

Here, when the dew point of the air from the outlet 61a is denoted by TD, a value obtained by subtracting TS from TD (TD-TS) is denoted by $\Delta$T. At least one of a surface temperature TS and the dew point TD is preferably controlled such that $\Delta$T satisfies the following general formula (1). The surface temperature TS of the coating layer can be measured by, for example, a non-contact thermometer, such as an infrared thermometer commercially available, that is disposed near a conveying path of the coating layer. When $\Delta$T is less than 3°C, the water drops are hardly generated. In contrast, when $\Delta$T is more than 30°C, plural water drops are generated drastically. In this case, the water drops become nonuniform in size, and otherwise, the water drops, which should be arranged in two dimensional arrangement, namely should be arranged in a plane, are arranged in three dimensional arrangement in which the water drops overlap with each other. Note that it is preferable that the value of $\Delta$T is decreased in the second area 45. Thus, it becomes possible to control the generation speed of the water drops and the size of generated water drops, and further it becomes possible to form the water drops each having an uniform diameter in the two dimensional arrangement, that is, in the plane direction of the coating layer.

[General Formula (1)]

$$3°C \leq \Delta T \leq 30°C$$

In the first area 44, the surface temperature TS of the coating layer is controlled by the support 33 disposed to be in contact with the rollers 52 and a temperature controlling plate (not shown) disposed to face the support 33. However, the surface temperature TS may be controlled by any one of them. Further, the dew point TD is controlled by adjusting the conditions of the humidified air to be fed from the air feeding / sucking unit 61.

Air feeding / sucking units 63 and 64 are disposed in this order from the upstream side along the moving path of the coating layer in the second area 45. The air feeding / sucking unit 63 is disposed in the downstream side from and adjacent to the air feeding / sucking unit 61 disposed in the first area 44, such that the water drops generated in the first area 44 grow up uniformly. As the distance between the first area 44 and the second area 45 is increased, namely, as the time required for the generated water drops to enter the second area 45 becomes longer, the sizes of the water drops after completely growing up become less uniform. The number of the air feeding / sucking units is not limited to two that is adopted in this embodiment, and may be one, or three or more. Although the structure of each of the air feeding / sucking units 63 and 64 is the same as that of the air feeding / sucking unit 61, it is not limited thereto in the present invention.

In the second area 45, at least one of the surface temperature TS and the dew point TD is controlled so as to satisfy the following general formula (2). The surface temperature TS is mainly controlled by a not-shown temperature controlling plate disposed at the vicinity of the coating layer. The structure of the temperature controlling plate is basically identical to that of the temperature controlling plate disposed in the first area 44. The temperature controlling plate can change the temperature of the surface temperature TS along the moving direction of the support 33. Further, the dew point TD is controlled by adjusting the conditions of the humidified air from an outlet 63a. Note that, in the third area 46, the surface temperature TS of the coating layer can be measured by a thermometer that is disposed near a conveying path of the coating layer. The structure of the thermometer is the same as that of the above thermometer. The conditions in the third area 46 are set as described above, so that the water drops are grown up slowly and the water drops are arranged with the support of the capillary force. Thereby, the uniform water drops can be arranged densely. In a case where $\Delta T$ is 0°C or less, the water drops are not grown up sufficiently, and are not arranged densely, and further the shape and size of the pores and the arrangement of the pores in the multilayer film 30 become nonuniform in some cases. In contrast, in a case where $\Delta T$ is more than 10°C, the water drops are formed to be stacked on one another locally, that is, formed in a three dimensional arrangement. Thereby, the shape and size of the pores and the arrangement of the pores in the multilayer film 30 become nonuniform in some cases.

[General Formula (2)]

$$0°C < \Delta T \leq 30°C$$

It is preferable that, while the water drops are being grown up, as much solvent as possible is evaporated from the coating layer. The surface temperature TS and the dew point TD in the second area 45 are set to the above range respectively, and thereby it is possible to evaporate the solvent from the coating layer sufficiently, and also it is possible to prevent abrupt evaporation of the solvent. Further, it is preferable that only the solvent is evaporated selectively without evaporating the water drops. Therefore, the evaporation speed of the solvent is preferably faster than that of the water drops under the same temperature and pressure. Accordingly, it becomes easier for the water drops to enter the inside of the coating layer in accordance with the evaporation of the solvent. In the second area 45, the second polymer for forming the support 33 has a property of being dissolved into the solvent contained in the coating layer, and therefore if it takes much time for the solvent to be evaporated from the coating layer in the second area 45, the support 33 and the coating layer are mixed with each other. As a result, it becomes impossible to obtain the desired multilayer film 30. In view of the above, the time for evaporating much solvent from the coating layer is set to be within 20 minutes in the second area 45.

The step for evaporating the solvent in the second area 45 is performed within 20 minutes. The step for evaporating the solvent is preferably performed within 5 minutes, and more preferably within 1 minute. In a case where the time for evaporating the solvent is 20 minutes or more, the solvent is mixed with the second polymer for forming the support 33, and it becomes impossible to obtain the desired film. In a case where the time for evaporating the solvent is within 1 minute, it becomes possible to prevent the solvent from being mixed with the second polymer for forming the support 33, and at the same time, it becomes possible to prevent the growth of the water drops, and accordingly, the multilayer film 30 having fine pores can be obtained. Additionally, for the purpose of obtaining the multilayer film 30 in which pores each having a large diameter are arranged regularly, it is preferable to take as much time as possible for completing drying as far as the solvent is not mixed with the second polymer for forming the support 33. Note that, it is preferable that, as soon as the coating layer enters the second area 45, the evaporating speed of the solvent is controlled to be gradually faster. Thereby, the water drops are grown up in a stable manner.

Air feeding / sucking units 71 to 74 are disposed in this order from the upstream side along the moving path of the coating layer in the third area 46. The number of the air feeding / sucking units is not limited to four that is adopted in this embodiment, and may be one, two, three, or five or more. Although the structure of each of the air feeding / sucking units 71 to 74 is the same as that of the air feeding / sucking unit 61, it is not limited thereto in the present invention.

At least one of the surface temperature TS and the dew point TD is controlled such that the surface temperature TS and the dew point TD satisfy the following general formula (3). The surface temperature TS is mainly controlled by a temperature controlling plate 76. Further, the dew point TD is controlled by adjusting the conditions of the dry air from an outlet 63a. Note that, in the third area 46, the surface temperature TS of the coating layer can be measured by the same thermometer as described above that is disposed near a conveying path of the coating layer. The conditions in the third area 46 are set as described above, so that the growth of the water drops is stopped and the water drops are evaporated. Accordingly, the multilayer film 10 having the uniform pores can be produced. In the case of $TS \leq TD$, water vapor is further condensed from ambient gas on the water drops, and the formed porous structure may be destroyed in some cases.

$$[General\ Formula\ (3)]$$

$$TS > TD$$

The main object to be achieved in the third area 46 is to evaporate the water drops. However, the solvent which has not been evaporated until reaching the third area 46 is also evaporated in the third area 46.

In the water drop evaporating step performed in the third area 46, instead of using the air feeding / sucking units 71 to 74, a reduced-pressure drying system or a so-called 2D nozzle may be used. Reduced-pressure drying makes it easier to adjust the evaporation speed of each of the solvent and the water drops. Thereby, it is possible to enhance the evaporation of each of the solvent and the water drops, and to form the water drops more uniformly inside the coating layer. Accordingly, it is possible to form pores 31 (see Fig. 2) having controlled size and shape at positions corresponding to the water drops. Note that the 20 nozzle is composed of an air feeding nozzle member for feeding air and air sucking nozzle member for sucking air around the coating layer.

The film production apparatus 41 further includes a feeding device (not shown) for feeding the long support 33 wound into a roll to the first area 44, and a winding device (not shown) for winding the multilayer film 30. Further, instead of the winding device, a function imparting device for imparting other functions to the multilayer film 30 or a processing device for processing the multilayer film 30 such that the multilayer film 30 has a predetermined shape are used in some cases.

The speed for feeding the air from each of the air feeding / sucking units 61, 63, and 64 is preferably set in accordance with the moving speed of the support 33. The speed for feeding the air to the moving support 33 is determined as the air speed relative to the moving speed of the support 33. Therefore, in a case where the air is blown to the support 33 disposed stationary, the speed for feeding the air to the moving support 33 is determined as the air speed. The air speed relative to the moving speed of the support 33 is preferably in the range between 0.02 m/sec or more and 2 m/sec or less, more preferably in the range between 0.05 m/sec or more and 1.5 m/sec or less, and most preferably in the range between 0.1 m/sec or more and 1.0 m/sec or less. In a case where relative speed is less than 0.02 m/sec, the coating layer may be introduced to the third area 46 before the water drops are formed to be densely arranged in some cases. In contrast, in a case where the relative speed is more than 2 m/sec, an exposed surface of the coating layer becomes rough or the condensation does not proceed sufficiently in some cases.

According to the methods described above, it is possible to produce a film having excellent handleability, while a plurality of uniform pores are formed in the film, and the thickness of the film is not influenced by the pore diameter.

[Example 1]

The multilayer film 30 was produced by the multilayer film production apparatus 41 such that the thickness TA became 20μm, the pore diameter D became 2μm, and the value of TA/D became 10.0. The support 33 was formed from polylactic acid (PLA) as the first polymer. The coating liquid 57 for forming the porous layer 32 was obtained by dissolving the PLA as the second polymer into the solvent. The coating liquid 57 was applied such that the thickness of coating layer had a thickness (unit; mm) shown in the column "Thickness of coating layer" in Table 1. "Thickness of coating layer" is the thickness of the coating layer before being dried.

In the first area 44, the humidified air was blown to the coating layer by the air feeding / sucking unit 61 with the speed of 0.20 m/sec relative to the moving speed of the support 33. The column "humidified air feeding speed" in Table 1 shows the speed (unit; m/sec) for feeding the humidified air from the air feeding / sucking unit 61 relative to the moving speed of the support 33.

The dew point TD and the speed for feeding the air from the air feeding / sucking units 63 and 64, and the surface temperature TS of the coating layer were controlled such that the dying time in the second area 45, which was required between the time when the evaporation of the solvent was started and the time when the evaporation of the water drops was started after the growth of the water drops was stopped, was 3 minutes.

The obtained multilayer film 30 was evaluated in accordance with the uniformity in the pore diameter D and regularity of arrangement of the pores by the following criteria at four stages. The evaluation results are shown in Table 1.

A; The pore diameters were extremely uniform, the arrangement of the pores was extremely excellent in regularity, and handleability of the multilayer film 30 was extremely excellent.

B; The pore diameters were uniform, the arrangement of the pores was excellent in regularity, and handleability of the multilayer film 30 was excellent.

C; Although handleability of the multilayer film 30 was excellent, the pore diameters were nonuniform or the arrangement of the pores was poor in regularity in some areas.

D; The handleability of the multilayer film 30 was poor because the multilayer film 30 was torn even if being carefully used.

[Example 2]

The multilayer film 30 was produced such that the thickness TA became 20µm, the pore diameter D became 10.0µm, and the value of TA /D became 2.0. The thickness of the coating layer before being dried, the drying time in the second area, the speed for feeding the humidified air, and the evaluation results are shown in Table 1 together with those of the following examples and comparative examples.

[Example 3]

The multilayer film 30 was produced such that the thickness TA became 200µm, the pore diameter D became 5.0µm, and the value of TA /D became 40.0.

[Example 4]

The multilayer film 30 was produced such that the thickness TA became 40µm, the pore diameter D became 0.5µm, and the value of TA /D became 80.0.

[Example 5]

The multilayer film 30 was produced such that the thickness TA became 100µm, the pore diameter D became 0.5µm, and the value of TA /D became 200.0.

[Example 6]

The multilayer film 30 was produced such that the thickness TA became 40µm, the pore diameter D became 20.0µm, and the value of TA /D became 2.0.

[Example 7]

The multilayer film 30 was produced such that the thickness TA became 80µm, the pore diameter D became 0.5µm, and the value of TA /D became 160.0. The first polymer and the second polymer were triacetyl cellulose (TAG) as well as the following examples 8 to 11.

[Example 8]

The multilayer film 30 was produced such that the thickness TA became 80µm, the pore diameter D became 1.0µm, and the value of TA /D became 80.0.

[Example 9]

The multilayer film 30 was produced such that the thickness TA became 60$\mu$m, the pore diameter D became 3.0$\mu$m, and the value of TA /D became 20.0.

[Example 10]

The multilayer film 30 was produced such that the thickness TA became 40$\mu$m, the pore diameter D became 10.0$\mu$m, and the value of TA /D became 4.0.

[Example 11]

The multilayer film 30 was produced such that the thickness TA became 40$\mu$m, the pore diameter D became 10.0$\mu$m, and the value of TA /D became 4.0.

[Comparative example 1]

The multilayer film was produced such that the thickness TA became 1$\mu$m, the pore diameter D became 1.0$\mu$m, and the value of TA /D became 1.0.

[Comparative example 2]

The multilayer film was produced such that the thickness TA became 40$\mu$m, the pore diameter D became 20.0$\mu$m, and the value of TA /D became 2.0.
Note that, in Table 1, the thickness of the coating layer is denoted by TCL, the drying time is denoted by DT, the humidified air feeding speed is denoted by HAFS, and the evaluation result is denoted by EVA.

[Table 1]

|  | TA (μm) | D (μm) | TA/D (-) | 1st polymer | 2nd polymer |
|---|---|---|---|---|---|
| EX 1 | 20 | 2.0 | 10.0 | PLA | PLA |
| EX 2 | 20 | 10.0 | 2.0 | PLA | PLA |
| EX 3 | 200 | 5.0 | 40.0 | PLA | PLA |
| EX 4 | 40 | 0.5 | 80.0 | PLA | PLA |
| EX 5 | 100 | 0.5 | 200.0 | PLA | PLA |
| EX 6 | 40 | 20.0 | 2.0 | PLA | PLA |
| EX 7 | 80 | 0.5 | 160.0 | TAC | TAC |
| EX 8 | 80 | 1.0 | 80.0 | TAC | TAC |
| EX 9 | 60 | 3.0 | 20.0 | TAC | TAC |
| EX 10 | 40 | 10.0 | 4.0 | TAC | TAC |
| EX 11 | 40 | 10.0 | 4.0 | TAC | TAC |
| Com 1 | 1 | 1.0 | 1.0 | PLA | PLA |
| Com 2 | 40 | 20.0 | 2.0 | PLA | PLA |

|  | TCL (mm) | DT | HAFS (m/sec) | EVA |
|---|---|---|---|---|
| EX 1 | 0.20 | 3 min | 0.20 | A |
| EX 2 | 0.80 | 15 min | 0.20 | B |
| EX 3 | 0.50 | 10 min | 0.20 | B |
| EX 4 | 0.10 | 10 sec | 1.00 | A |
| EX 5 | 0.10 | 20 sec | 0.20 | A |
| EX 6 | 0.50 | 10 min | 0.20 | B |
| EX 7 | 0.05 | 10 sec | 0.50 | A |
| EX 8 | 0.10 | 20 sec | 2.00 | B |
| EX 9 | 0.30 | 5 min | 0.20 | A |
| EX 10 | 0.80 | 15 min | 0.10 | B |
| EX 11 | 0.80 | 15 min | 0.10 | B |
| Com 1 | 0.10 | 20 sec | 0.20 | D |
| Com 2 | 1.20 | 25 min | 0.05 | C |

Industrial Applicability

According to the multilayer film production method of the present invention, it is possible to produce the multilayer film having the porous layer and the support layer for supporting the porous layer. In the porous layer, the plurality of pores uniform in size are arranged regularly. Thereby, it is possible to set the thickness and the pore diameter in accordance with the use of the multilayer film. In the obtained multilayer film, the porous layer and the support are of polymer. Therefore, the multilayer film has flexibility. Accordingly, the multilayer film can be adhered to a curved surface, or a curved surface on which curvature is variable.

## Claims

1. A multilayer film comprising:

   a porous layer formed from a first polymer and having a plurality of pores; and
   a support formed from a second polymer and supporting said porous layer, said second polymer having solubility in a solvent capable of dissolving said first polymer.

2. A multilayer film described in claim 1, wherein a thickness of said multilayer film is denoted by TA, a diameter of each of pores formed in said multilayer film is denoted by D, and a value obtained by dividing TA by D (TA/ D) is in a range between 2 or more and 200 or less.

3. A multilayer film described in claim 2, wherein said porous layer is formed by applying a coating liquid of said first polymer dissolved in said solvent to at least one of surfaces of said support.

4. A method for producing a multilayer film having a layer and a support, said layer being formed by drying after applying a coating liquid of a first polymer dissolved in a solvent, said method comprising steps of:

   a step of applying said coating liquid to said support formed from said second polymer having solubility in said solvent;
   a step of condensing water vapor from ambient gas on said coating liquid applied to said support;
   a step of evaporating said solvent from said coating liquid within 20 minutes such that water drops generated by the condensation remain on said coating liquid; and
   a step of evaporating said water drops.

5. A method for producing a multilayer film described in claim 4, wherein said coating liquid is applied to said support such that a coating thickness is in a range between 0.01 mm or more and 1 mm or less.

6. A method for producing a multilayer film described in claim 5, wherein a speed for feeding humidified air to said coating liquid applied to said support is in a range between 0.02 m/sec or more and 2 m/sec or less.

# FIG. 1A

# FIG. 1B

# FIG. 1C

# FIG. 2A

# FIG. 2B

FIG. 3

## INTERNATIONAL SEARCH REPORT

| International application No. |
|---|
| PCT/JP2008/066702 |

A. CLASSIFICATION OF SUBJECT MATTER
*B32B5/18*(2006.01)i, *B05D3/00*(2006.01)i, *B05D5/06*(2006.01)i, *C08J7/04*
(2006.01)i, *C08J9/28*(2006.01)n

According to International Patent Classification (IPC) or to both national classification and IPC

B. FIELDS SEARCHED

Minimum documentation searched (classification system followed by classification symbols)
B32B5/18, B05D3/00, B05D5/06, C08J7/04, C08J9/28

Documentation searched other than minimum documentation to the extent that such documents are included in the fields searched
Jitsuyo Shinan Koho        1922-1996   Jitsuyo Shinan Toroku Koho    1996-2008
Kokai Jitsuyo Shinan Koho   1971-2008   Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-70254 A  (Fuji Photo Film Co., Ltd.),<br>16 March, 2006 (16.03.06),<br>Claims 1, 2, 5, 10, 21 to 24, 41; Par. Nos.<br>[0011], [0043] to [0048], [0056], [0057],<br>[0059]; Figs. 2 to 5<br>& EP 1789482 A1        & WO 2006/014009 A1 | 1,4<br>2,3,5,6 |
| Y<br>A | JP 2006-38754 A  (Fuji Photo Film Co., Ltd.),<br>09 February, 2006 (09.02.06),<br>Claims 9 to 11, 26; Par. Nos. [0014] to [0016],<br>[0052]; Fig. 3<br>(Family: none) | 2,3<br>1,4-6 |

[X] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>05 November, 2008 (05.11.08) | Date of mailing of the international search report<br>18 November, 2008 (18.11.08) |
|---|---|
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

International application No.

PCT/JP2008/066702

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2007-2241 A (Fujifilm Holdings Corp.),<br>11 January, 2007 (11.01.07),<br>Claim 1; Par. Nos. [0036], [0047] to [0049],<br>[0057]; Figs. 11 to 14<br>& EP 1885779 A1 & WO 2006/126735 A1 | 5,6<br>1-4 |
| A | WO 2003/062506 A1 (Showa Denko Kabushiki<br>Kaisha),<br>31 July, 2003 (31.07.03),<br>Claims 1, 4, 17, 26, 27; page 15, lines 8 to 18;<br>examples 10, 11<br>& US 2004/0076795 A1 & EP 1477589 A1 | 1-6 |
| A | JP 2003-128832 A (The Institute of Physical<br>and Chemical Research, Showa Denko Kabushiki<br>Kaisha),<br>08 May, 2003 (08.05.03),<br>Full text; Figs. 1 to 13<br>(Family: none) | 1-6 |
| A | JP 2002-347107 A (The Institute of Physical<br>and Chemical Research),<br>04 December, 2002 (04.12.02),<br>Full text; Figs. 1, 2<br>(Family: none) | 1-6 |
| E | JP 2007-260986 A (Fujifilm Corp.),<br>11 October, 2007 (11.10.07),<br>Claims 1, 10, 14, 15; Figs. 2 to 4<br>& US 2007/0231558 A1 | 1-6 |
| E | JP 2007-291367 A (National University<br>Corporation Hokkaido University, Fujifilm<br>Corp.),<br>08 November, 2007 (08.11.07),<br>Claims 1, 2; Figs. 2 to 4<br>& WO 2007/114421 A1 | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001157574 A
- JP 2003149096 A
- JP 2002335949 A